# EUROPÄISCHE PATENTANMELDUNG

(11) **EP 4 349 692 A2**
(43) Veröffentlichungstag der Anmeldung: **10.04.2024**
(21) Anmeldenummer: 23207733.9
(22) Anmeldetag: 03.11.2023
(51) Int. Cl.: B62D 21/11

(54) **HILFSRAHMEN FÜR EIN KRAFTFAHRZEUG**

(71) Anmelder: Benteler Automobiltechnik GmbH, 33102 Paderborn (DE)
(72) Erfinder: ALTEMEIER, Julian, 33102 Paderborn (DE); SVOBODA, Tomas, 46015 Liberec (CZ)
(74) Vertreter: Ksoll, Peter

(57) **Zusammenfassung**

Ein Hilfsrahmen (1) für ein Kraftfahrzeug weist einen Rahmenkörper (2) aus Schalenbauteilen (5, 6) und zumindest eine Montagehülse (12, 13) auf. Jede Montagehülse (12, 13) besitzt einen Hülsenkörper (16) mit einem Längsdurchgang (17) und einen Hülsenkopf (18 19) mit einer Durchgangsöffnung (20). Erfindungsgemäß ist der Hülsenkopf (18, 19) ein Kaltfließpressteil, wobei die Durchgangsöffnung (20) im Hülsenkopf (18, 19) beim Kaltfließpressen im Hülsenkopf (18, 19) erzeugt ist. Der Hülsenkopf (18, 19) ist stirnseitig auf dem Hülsenkörper (16) positioniert.

## Beschreibung

Die Erfindung betrifft einen Hilfsrahmen für ein Kraftfahrzeug, welcher einen Rahmenkörper und zumindest eine Montagehülse aufweist, wobei die Montagehülse einen Hülsenkörper mit einem Längsdurchgang und einen Hülsenkopf mit einer Durchgangsöffnung besitzt.

Hilfsrahmen für Kraftfahrzeuge, die auch als Achsträger, Aggregateträger oder Fahrschemel bezeichnet werden, sind in unterschiedlichsten Ausführungsformen bekannt und werden mit der Karosserie über Anbindungsstellen verschraubt. Üblicherweise hat der Hilfsrahmen einen Rahmenkörper, der ein innen offenes Rechteck oder Trapez bildet, wobei der Rahmenkörper meist aus zwei oder mehreren Blechformteilen zu einem Hohlprofil verschweißt ist. Am Hilfsrahmen sind die aufbauseitigen Anlenkpunkte der Radaufhängungen befestigt. Wenn der Hilfsrahmen weitere Funktionen übernehmen soll, weist der Rahmenkörper zusätzliche Aufbau- bzw. Anbaukomponenten auf. Der Hilfsrahmen kann starr mit der Karosserie verschraubt sein oder über elastische Lager mit der Karosserie verbunden sein.

Durch die EP 2 902 303 B1 zählt ein Hilfsrahmen für ein Kraftfahrzeug zum Stand der Technik. Dieser weist zwei miteinander verbundene Schalenelemente auf sowie mindestens eine Karosserieanbindungshülse zum Durchstecken einer Schraube. Die Karosserieanbindungshülse ist eine Montagehülse, die einen Hülsenkörper mit einem scheibenartigen Hülsenkopf aufweist.

Ein Befestigungssystem zur Anbindung eines Achsenrahmens an eine Karosserie eines Kraftfahrzeuges gehört durch die DE 10 2015 208 898 B3 zum Stand der Technik. Zum Befestigungssystem gehört eine Montagehülse, die am bzw. im Rahmenkörper festlegbar ist und zwei mit Abstand zueinander angeordnete Wandabschnitte des Rahmenkörpers verbindet.

Eine zweiteilig ausgebildete Karosserieanbindungshülse umfassend eine Distanzhülse und eine separate Karosserieanbindungshülse offenbart die DE 10 2016 121 756 B3.

Die CN 217598682 U offenbart einen Hilfsrahmen für ein Kraftfahrzeug, welcher einen Rahmenkörper und Montagehülsen aufweist. Die Montagehülsen sind einteilig ausgeführt mit einem Hülsenkörper und einem Hülsenkopf. Die Säulenstruktur der Montagehülse soll durch Kaltstauchtechnik geformt sein.

Der Erfindung liegt ausgehend vom Stand der Technik die Aufgabe zugrunde, einen Hilfsrahmen für ein Kraftfahrzeug aufzuzeigen, mit verbesserten Anbindungs- bzw. Anlenkpunkten und herstellungs- und bauteiltechnisch verbesserten Montagehülsen.

Die Lösung dieser Aufgabe besteht erfindungsgemäß in einem Hilfsrahmen gemäß Anspruch 1.

Vorteilhafte Ausgestaltungen und Weiterbildungen des erfindungsgemäßen Kraftfahrzeug-Hilfsrahmens sind Gegenstand der abhängigen Ansprüche. Ausgestaltungen und Modifikationen von Merkmalen des Hilfsrahmens, die einzeln oder in Kombination die Erfindung technisch vorteilhaft ausgestalten, ergeben sich auch aus der Beschreibung und den beigefügten Zeichnungen.

Der erfindungsgemäße Kraftfahrzeug-Hilfsrahmen weist einen Rahmenkörper und zumindest eine Montagehülse auf. Der Rahmenkörper ist bevorzugt aus Schalenbauteilen gebildet. Die Schalenbauteile bestehen aus Metallblech und sind zum Rahmenkörper zusammengesetzt. Der Rahmenkörper weist einen Hohlraumabschnitt auf mit zwei zueinander beabstandeten Wänden. Die Montagehülse erstreckt sich zwischen zwei in den Wänden des Rahmenkörpers angeordneten Öffnungen, die koaxial einander gegenüberliegen und eine gemeinsame Mittellängsachse besitzen.

Eine Montagehülse weist jeweils einen Hülsenkörper mit einem Längsdurchgang sowie einen Hülsenkopf mit einer Durchgangsöffnung auf. Es handelt sich um separate Bauteile, die zur Montagehülse zusammengesetzt sind. Die Durchgangsöffnung im Hülsenkopf setzt den Längsdurchgang im Hülsenkörper fort. Der Hülsenkörper und der Hülsenkopf haben eine gemeinsame Mittellängsachse.

Der Hülsenkopf und der Hülsenkörper sind separat voneinander gefertigt und zur Montagehülse aneinander gesetzt, wobei der Hülsenkopf stirnseitig auf dem Hülsenkörper positioniert ist. Der Hülsenkopf liegt an der Stirnseite des Hülsenkörpers an.

Vorzugsweise ist der Hülsenkopf ein Kaltfließpressteil, wobei die Durchgangsöffnung im Hülsenkopf beim Kaltfließpressen im Hülsenkopf erzeugt ist. Der durch Kaltfließpressen separat gefertigte Hülsenkopf ist stirnseitig an einem Ende des Hülsenkörpers auf dem Hülsenkörper positioniert.

Der Hülsenkopf kann auch durch spanende Bearbeitung hergestellt sein.

Die erfindungsgemäßen Montagehülsen sind herstellungs- und bauteiltechnisch vorteilhaft und ermöglichen einen Hilfsrahmen für ein Kraftfahrzeug hinsichtlich seiner Anbindungs- bzw. Anlenkpunkte vorteilhaft auszugestalten und in das Fahrwerksystem von Kraftfahrzeugen zu integrieren. Eine Anpassung des Hilfsrahmens durch Ausgestaltung der Montagehülsen an unterschiedliche Baureihen von Kraftfahrzeugen ist rationell möglich. Besonders vorteilhaft sind die Montagehülsen, weil form- und materialkomplexe Hülsenkörper bereitgestellt werden mit auf den Anwendungszweck angepassten Hülsenköpfen.

Die Montagehülsen erstrecken sich zwischen zwei Wänden des Rahmenkörpers und den in den Wänden angeordneten Öffnungen. Hierbei können die Montagehülsen in den Öffnungen festgelegt sein. Die Montagehülsen können mit den Hülsenkörpern auch eine Innenfläche einer Wand des Rahmenkörpers kontaktieren und eine Öffnung in der Wand des Rahmenkörpers umschließen. Im Kontaktbereich mit der Wand sind die Montagehülsen und der Rahmenkörper stoffschlüssig gefügt.

Die Hülsenköpfe sind durch Kaltfließpressen, also eine Kaltmassivumformung hergestellt. Allgemein wird unter Kaltmassivumformung auch Kaltfließpressen verstanden. Der Umformprozess erfolgt bei Raumtemperatur. Das Umformwerkzeug erfährt keine aktive Erwärmung und die Temperatur des Werkstoffes bleibt unterhalb der Rekristallisationstemperatur. Ein massiver Rohling wird beim Kaltfließprozess unter so hohen Druck gesetzt, dass der Werkstoff zu Fließen beginnt. Im Wege des Kaltfließpressens erhält der Hülsenkopf seine Außenkontur. Beim Kaltfließpressen wird die Durchgangsöffnung im Hülsenkopf erzeugt. Die Herstellung der Hülsenköpfe bzw. die Umformung der Hülsenköpfe selbst kann in einer oder mehreren Prozessstufen durchgeführt werden. Nach dem Kaltfließprozess kann der Hülsenkopf seine Endgeometrie besitzen. Je nach Ausgestaltung der Hülsenköpfe ist nach dem Kaltfließpressen nur noch eine geringe Nachbearbeitung an den Hülsenköpfen erforderlich.

Die Hülsenköpfe weisen eine sich in Längsrichtung der Montagehülse erstreckende Durchgangsöffnung auf, die mit dem Längsdurchgang in einem Hülsenkörper kommuniziert.

Die Hülsenkörper können verschiedene Wandstärken haben, je nach Festigkeits- bzw. Belastungsanforderungen.

Die Montagehülse kann einen Hülsenkörper mit einem Längsschlitz aufweisen.

Eine für die Praxis vorteilhafte Ausgestaltung sieht vor, dass die Montagehülse einen Hülsenkörper mit einem Längsschlitz und einen stirnseitig mit dem Hülsenkörper stoffschlüssig gefügten, kaltfließgepressten Hülsenkopf aufweist.

Der Hülsenkörper kann nahtlos ausgeführt sein.

Der Hülsenkörper kann ein längsnahtgeschweißtes Rohrstück sein.

Der Hülsenkörper kann ein fließgepresstes Rohrstück sein.

Der Hülsenkopf und der Hülsenkörper können formschlüssig und/oder kraftschlüssig und/oder stoffschlüssig miteinander gefügt sein.

Je nach Ausgestaltung kann es genügen, dass der Hülsenkopf auf den Hülsenkörper aufgesetzt ist. Die Fixierung der beiden Bauteile gegeneinander erfolgt mittels einer durch die Montagehülse geführte Montageschraube im Rahmenkörper des Hilfsrahmens.

Der Hülsenkopf und der Hülsenkörper können durch eine Pressverbindung bzw. Pressfügen mechanisch verbunden sein.

Weiterhin kann der Hülsenkopf stoffschlüssig mit dem Hülsenkörper gefügt sein.

Der Hülsenkopf kann an einer Stirnseite des Hülsenkörpers schweißtechnisch gefügt sein.

Weiterhin besteht eine vorteilhafte Ausführungsform darin, dass der Hülsenkopf an einer Stirnseite klebetechnisch also mittels Klebstoff gefügt ist. Der Hülsenkopf und der Hülsenkörper sind durch Kleben mittels Klebstoff stoffschlüssig verbunden.

Ein alternativer Aspekt sieht vor, dass der Hülsenkopf und der Hülsenkörper formschlüssig miteinander verbunden sind. Hier sind die Fügeflächen von Hülsenkörper und Hülsenkopf geometrisch so aufeinander abgestimmt, dass ein Formschluss durch Ineinandergreifen von mindestens jeweils einem Formschlusselement am Hülsenkopf und an einem stirnseitigen Ende des Hülsenkörpers erfolgt.

Eine vorteilhafte Ausgestaltung sieht vor, dass die Hülsenkörper rollgeformt, gewalzt oder durch U-O-Formen hergestellt sind.

Der Hülsenkörper kann durch Rollformen hergestellt sein. Ausgangsmaterial kann ein flaches Metallband aus Stahl oder Edelstahl von hoher Festigkeit sein. Hierbei kann ein Langprofil in Form eines Schlitzrohrs hergestellt werden, von welchem die Hülsenkörper in benötigter Länge abgelängt werden. Selbstverständlich kann auch eine einzelne vorkonfektionierte Blechplatine zu einem Hülsenkörper geformt werden.

Der Hülsenkörper kann durch U-O-Formen einer Blechplatine hergestellt sein. Die Blechplatine ist vorkonfektioniert und entspricht der Abwicklung des Hülsenkörpers. Auch können durch U-O-Formen Langprofile in Form von Schlitzrohren hergestellt werden, von welchen die Hülsenkörper in benötigter Länge abgeteilt werden.

An einer Stirnseite des Hülsenkörpers ist der Hülsenkopf positioniert und insbesondere gefügt.

Der Hülsenkörper kann einen Längsschlitz aufweisen. Dieser kann geradlinig oder auch gekrümmt bzw. kurvenförmig verlaufen. Bevorzugt ist ein geradliniger Längsschlitz, der zur Mittellängsachse auch geneigt verlaufen kann.

Der Hülsenkörper weist entlang des Längsschlitzes einander gegenüberliegende Längsränder auf. Diese können einen Abstand zueinander aufweisen oder aber spaltfrei aneinander liegen.

Zwischen den Längsrändern ist eine Stoßfuge ausgebildet.

An den sich entlang des Längsspaltes erstreckenden Längsrändern des Hülsenkörpers können Formschlusselemente ausgebildet sein. Diese sind vorzugsweise komplementär zueinander ausgebildet und greifen ineinander. Die Längsränder können miteinander verkämmt sein.

Die Längsränder des Hülsenkörpers können ganz oder zumindest partiell miteinander gefügt sein. Die Längsränder entlang des Längsschlitzes des Hülsenkörpers können stoffschlüssig mittels Schweißen gefügt sein.

Der Hülsenkopf kann eine auf seine Anbindungsfunktion abgestimmte Geometrie besitzen. Es sind formkomplexe Hülsenkopfgeometrien möglich. Der Hülsenkopf kann nach seiner kaltpresstechnischen Herstellung nachbearbeitet werden. Auch kann der Hülsenkopf wärmebehandelt sein.

Ein besonderer Vorteil ergibt sich erfindungsgemäß daraus, dass formkomplexe Hülsenkörper für die Befestigung von Teilen am Hilfsrahmen oder für die Hilfsrahmenbefestigung herstellbar sind. Insbesondere können Hülsenkörper in der erforderlichen Länge, abgestimmt auf den Verwendungs- bzw. Montagezweck bereitgestellt werden.

In einer Ausführungsform weist der Hülsenkopf ein stirnseitig am Hülsenkörper anliegendes Scheibenelement und hülsenkörperseitig zumindest ein Positionierelement auf, welcher in den Hülsenkörper ragt. Dies ist sowohl für die Fügung von Hülsenkopf und Hülsenkörper vorteilhaft als auch für die Stabilität der Montagehülse.

Weiterhin kann der Hülsenkopf hülsenkörperseitig, also an der zum Hülsenkörper gerichteten Seite, zumindest ein Positionierelement aufweisen, welches am stirnseitigen Endabschnitt des Hülsenkörpers außen anliegt. Insbesondere umgreift das hülsenkörperseitige Positionierelement den Endabschnitt des Hülsenkörpers außenseitig partiell oder umlaufend.

Weiterhin vorteilhaft weist der Hülsenkopf an seiner vom Hülsenkörper abgewandten Seite einen Montageabschnitt auf. Der Montageabschnitt kann an einer Außenoberfläche des Hülsenkopfs vorgesehen sein. Der Montageabschnitt kann auch innenseitig des Hülsenkopfs ausgebildet sein, insbesondere an einer zentrischen Durchgangsöffnung des Hülsenkopfs. Der Montageabschnitt kann beispielsweise ein Innengewindeabschnitt im Hülsenkopf sein.

Besonders vorteilhaft kommen Montagehülsen unterschiedlicher Ausgestaltung bei einem erfindungsgemäßen Hilfsrahmen zum Einsatz. Die Montagehülsen können sich durch die Form und Geometrie des Hülsenkopfs, in der Länge der Hülsenkörper und die Position des Hülsenkopfs relativ zum Rahmenkörper des Hilfsrahmens unterscheiden. Der Hülsenkopf kann gegen über einer Außenfläche des Rahmenkörpers positioniert sein. Der Hülsenkopf kann oberhalb einer Öffnung in einer Wand des Rahmenkörpers auf einer Wand aufliegen. Möglich ist weiterhin, dass der Hülsenkopf innenseitig an einer Wand des Rahmenkörpers anliegt. Weiterhin kann ein Hülsenkörper ein- oder beidseitig gegenüber einer Wand des Rahmenkörpers vorstehen oder innenseitig an einer Wand eines Rahmenkörpers anliegen.

Der Hülsenkörper einer Montagehülse kann durch eine Öffnung in einer Wand des Rahmenkörpers vorragen, wobei der Hülsenkopf der Montagehülse mit Abstand zu einer Außenfläche des Rahmenkörpers angeordnet ist. Der Hülsenkörper weist eine Länge auf, die größer ist als der Abstand zwischen den Wänden des Rahmenkörpers in dem Hohlraumabschnitt, in welchem die Montagehülse zwischen den Öffnungen in den Wänden angeordnet ist. Mit einem hülsenkopfseitigen Längenabschnitt steht die Montagehülse gegenüber dem Rahmenkörper vor.

Solche Montagehülsen kommen insbesondere zur Anbindung von elastischen Lagerbauteilen, beispielsweise als aufbauseitige Anlenkpunkte der Radaufhängung zum Einsatz. Die Montagehülsen sind Bestandteil der Karosserieanbindung des Hilfsrahmens und des Befestigungssystems zur Anbindung des Hilfsrahmens an einer Karosserie eines Kraftfahrzeugs.

Das Befestigungssystem kann durch die Länge der Montagehülse und dem Abstand zwischen dem Rahmenkörper und dem Hülsenkopf, also dem vom Rahmenkörper vorstehenden Längenabschnitt der Montagehülse, auf unterschiedliche Baureihen von Karosserien abgestimmt werden.

Weiterhin können Montagehülsen einen Hülsenkopf aufweisen, der in einer Öffnung in einer Wand des Rahmenkörpers angeordnet ist. Der Hülsenkopf kann bündig mit der Außenfläche des Rahmenkörpers abschließen oder aber mit seiner Stirnseite begrenzt über die Außenfläche der Wand des Rahmenkörpers vorstehen.

Bei einer weiteren Ausführungsform einer Montagehülse kann der Hülsenkopf mit einer hülsenkörperseitigen Anlagefläche am Rahmenkörper anliegen.

Der Hülsenkörper kann mit einem vom Hülsenkopf entfernten Endabschnitt durch eine Öffnung in einer Wand des Rahmenkörpers ragen. Dies trägt zur Erhöhung der Stabilität der Anbindung, die Zugänglichkeit der Montagehülsen bei und erweitert das Einsatzspektrums der Montagehülsen und deren Funktion im Hilfsrahmen.

Eine weitere vorteilhafte Ausgestaltung sieht vor, dass der Hülsenkörper mit einem vom Hülsenkopf abgewandten Ende eine Innenfläche einer Wand des Rahmenkörpers kontaktiert und hierbei eine Öffnung in der Wand des Rahmenkörpers umschließt.

Die Öffnung in der Wand des Rahmenkörpers kann in einer topfförmigen Einprägung vorgesehen sein. Innenseitig steht der Hülsenkörper mit dem Ende auf der Innenfläche der Wand auf, welche die Öffnung umschließt und ist mit dem Rahmenkörper gefügt.

Neben den erfindungsgemäßen Montagehülsen können im Inneren des Rahmenkörpers bzw. in Hohlraumabschnitten des Rahmenkörpers weitere Stützhülsen angeordnet sein, die sich zwischen zwei einander gegenüberliegenden koaxial zueinander angeordneten Öffnungen in den Wänden des Rahmenkörpers erstrecken.

Ein Hülsenkopf kann eine Friktionsstruktur aufweisen. Durch die Friktionsstruktur wird die Reibung am Hülsenkörper erhöht, insbesondere im Bereich um die Durchgangsöffnung.

Eine Friktionsstruktur kann auch rückseitig bzw. auf der zum Hülsenkörper gerichteten Seite des Hülsenkopfs vorgesehen sein.

Insbesondere ist die Friktionsstruktur an der Stirnseite des Hülsenkopfs vorgesehen. Durch die Friktionsstruktur wird die Reibung an der Stirnseite des Hülsenkopfs erhöht und die von einem Schraubelement ausgehende Kraft auf die Fläche im Bereich der Friktionsstruktur effizient übertragen. Auf diese Weise werden Schraubelemente besser gehalten und die Verbindung kann höhere Querkräfte übertragen.

Insbesondere umgibt die Friktionsstruktur die Durchgangsöffnung im Hülsenkörper zumindest partiell.

Die Friktionsstruktur ist bevorzugt bei der kaltfließpresstechnischen Herstellung des Hülsenkopfs erzeugt. Gegebenenfalls wird die dreidimensionale Geometrie der Friktionsstruktur durch eine Nachbearbeitung endgeformt.

Die Friktionsstruktur kann durch ein oder mehrere Friktionselemente gebildet sein, welche als Ring oder Kranz um die Durchgangsöffnung verlaufen. Weiterhin kann die Friktionsstruktur aus Friktionselementen in Form von Rippen oder Punkten gestaltet sein.

Eine praktisch vorteilhafte Ausführungsform sieht vor, dass die Friktionsstruktur durch Laser-Dimplings gebildet ist oder Laser-Dimplings enthält. Besonders bevorzugt ist der kaltfließgepresste Hülsenkopf mit Laser-Dimplings versehen.

Eine weitere vorteilhafte Ausgestaltung sieht vor, dass der Hülsenkopf und der Hülsenkörper aus verschiedenen Werkstoffen bestehen. Die Werkstoffe und deren Werkstoffeigenschaften sind abgestimmt auf den Einsatz innerhalb des Hilfsrahmens und der zu realisierenden Anbindungspunkte mit den Montagehülsen.

Eine weitere Ausführungsform sieht vor, dass der Hülsenkörper und/oder der Hülsenkopf gehärtet und/oder vergütet sind.

Insbesondere kann die Härte eines Hülsenkopfs durch einen Härtevorgang erhöht sein. Durch eine kombinierte Wärmebehandlung beim Vergüten können der Hülsenkörper und insbesondere der Hülsenkopf eine höhere Festigkeit bei gleichzeitig hoher Zähigkeit besitzen. Beim Vergüten werden die Bauteile abgehärtet, abgeschreckt und anschließend angelassen. Beim Vergüten erfolgt eine Steigerung der Härte bei gleichzeitiger Einstellung einer hohen Zähigkeit.

Die Erfindung ist nachfolgend anhand von in den Zeichnungen dargestellten Ausführungsbeispielen näher beschrieben. Es zeigen:
- Figur 1: einen erfindungsgemäßen Hilfsrahmen in einer Perspektive;
- Figur 2: einen Schnitt durch den Hilfsrahmen gemäß der Darstellung von Figur 1;
- Figur 3: ein Schnitt durch den Rahmenkörper des Hilfsrahmens im Bereich einer Montagehülse erster Art;
- Figur 4: eine weitere Schnittdarstellung durch den Hilfsrahmen gemäß der Darstellung von Figur 1 ;
- Figur 5: ein Schnitt durch den Rahmenkörper des Hilfsträgers im Bereich einer Montagehülse zweiter Art;
- Figur 6: eine Montagehülse in einer perspektivischen Darstellung;
- Figur 7: einen vertikalen Längsschnitt durch die Montagehülse gemäß Figur 6;
- Figur 8: eine Montagehülse in einem Rahmenkörper eines Hilfsrahmens montierten Darstellung;
- Figur 9: eine weitere Ausführung einer Montagehülse in einem der vertikalen Längsschnitt;
- Figur 10: eine Querschnittsdarstellung durch eine weitere Ausführungsform eines Hilfsrahmens mit einer Schnittdarstellung im Bereich einer Montagehülse und
- Figuren 11 bis 24: unterschiedliche Ausgestaltungen von Hülsenköpfen in jeweils zwei perspektivischen Ansichten.

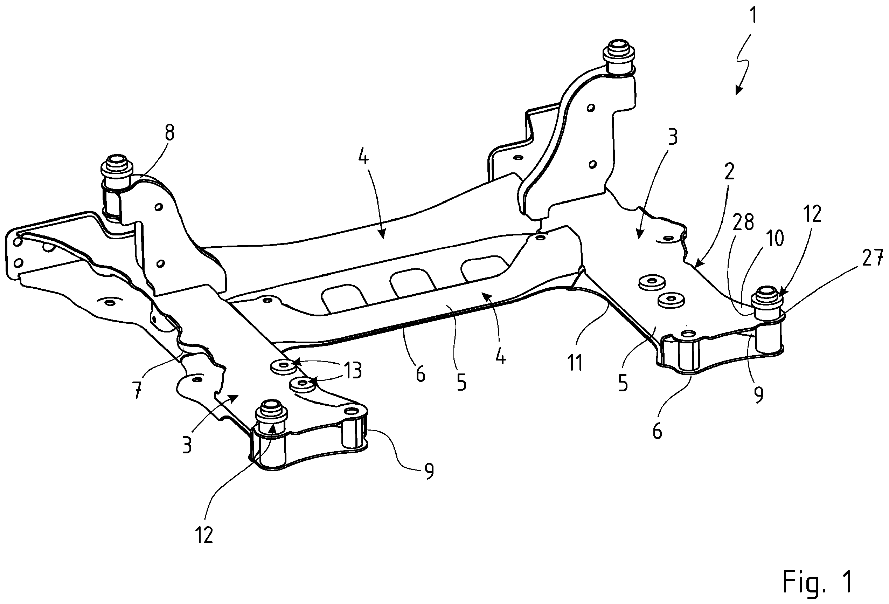

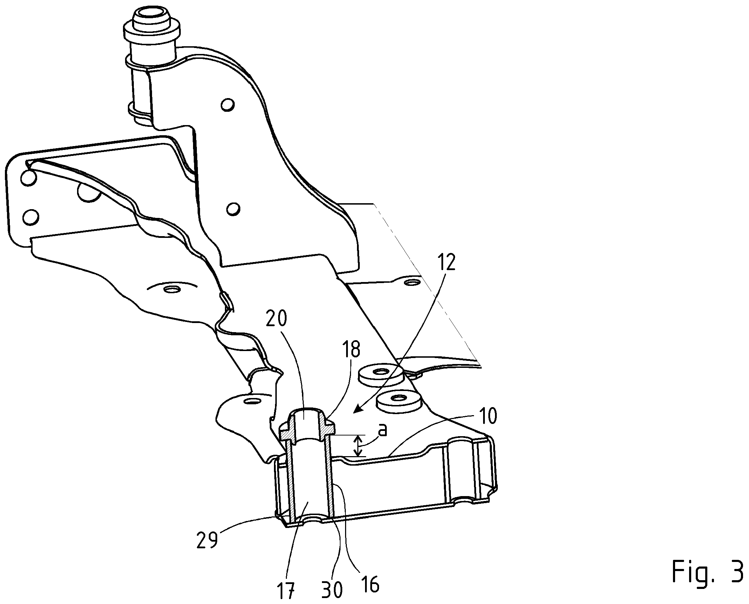

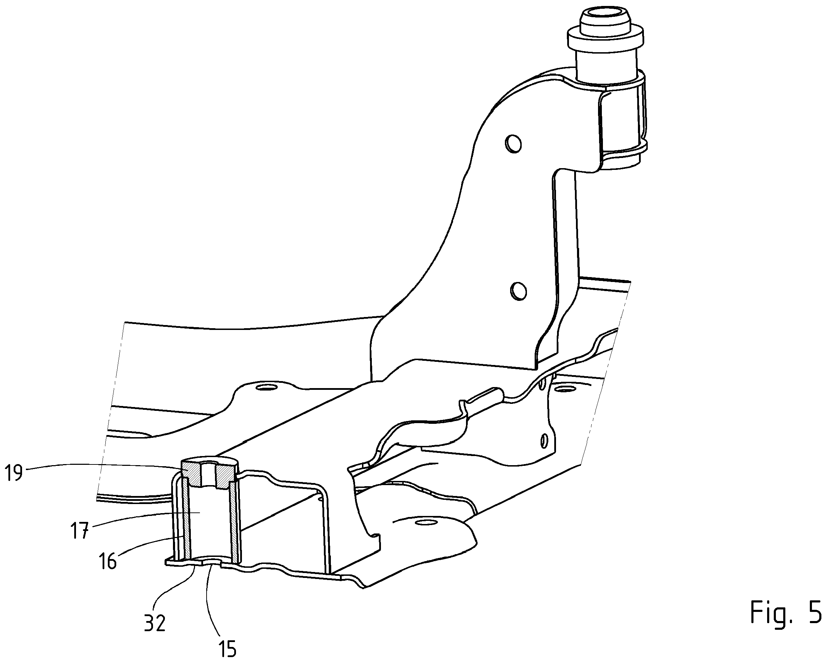

In den Figuren 1 bis 24 werden für gleiche oder einander entsprechende Bauteile und Bauteilkomponenten die gleichen Bezugszeichen verwendet, auch wenn aus Gründen der Vereinfachung auf eine wiederholte Beschreibung verzichtet wird.

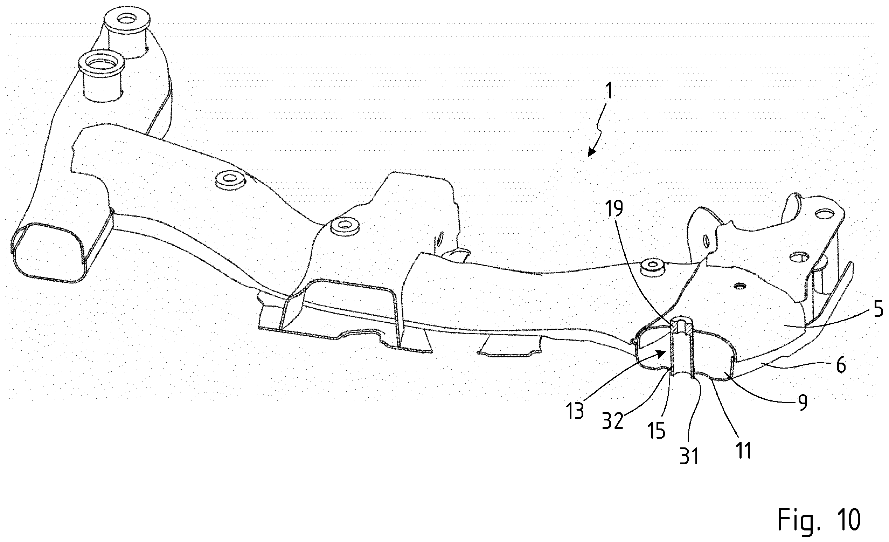

Die Figur 1 zeigt einen Hilfsrahmen 1 für ein Kraftfahrzeug in einer Perspektive. Einen Ausschnitt aus einem Hilfsrahmen 1 einer weiteren Ausführungsform zeigt die Figur 10.

Der Hilfsrahmen 1 weist einen Rahmenkörper 2 auf, der aus Rahmenprofilen 3, 4 zusammengesetzt ist. Bei den Rahmenprofilen 3, 4 handelt es sich um Längsträgerprofile und Querträgerprofile. Der Rahmenkörper 2 weist in seiner Grundform die Form eines innen offenen Rechteckes auf.

Die Rahmenprofile 3, 4 sind aus Schalenbauteilen 5, 6 aus Metallblech gebildet. Am Rahmenkörper 2 festgelegt sind des Weiteren Anbaukomponenten 7 und Aufbaukomponenten 8 zur Montage von unterschiedlichen Fahrwerks- oder Antriebskomponenten des Kraftfahrzeugs.

Der Rahmenkörper 2 eines Hilfsrahmens 1 kann insgesamt als Hohlprofil ausgeführt sein, insbesondere sind die Rahmenprofile 3, 4 also insbesondere die Längsträger und die Querträger als Hohlprofile ausgeführt. Die Rahmenprofile 3, 4 weisen einen Hohlraumabschnitt 9 mit zwei zueinander beabstandeten Wänden 10, 11 auf. Zur Anbindung des Hilfsrahmens an einer Karosserie und zur Anlenkung von Fahrwerk- oder Antriebskomponenten des Kraftfahrzeugs sind Montagehülsen 12, 13 vorgesehen. Die Montagehülsen 12, 13 erstrecken sich zwischen zwei in den Wänden 10, 11 des Rahmenkörpers 2 angeordneten Öffnungen 14, 15. Die Öffnungen 14, 15 liegen einander koaxial gegenüber und weisen eine gemeinsame Mittellängsachse auf.

Im Hilfsrahmen 1 sind Montagehülsen 12 erster Art und Montagehülsen 13 zweiter Art verbaut.

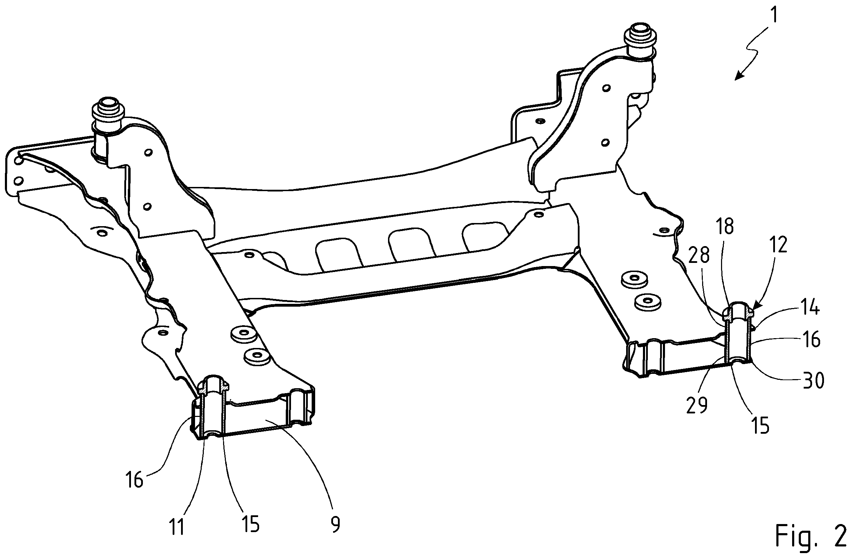

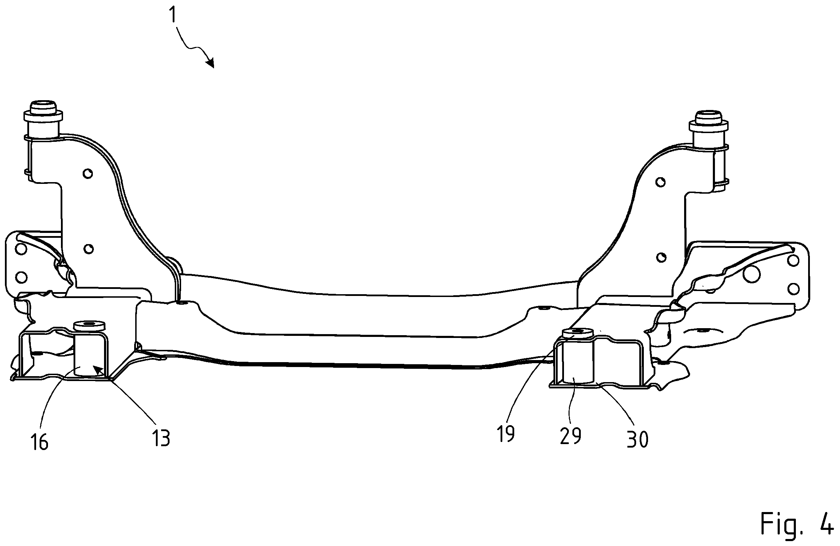

Montagehülsen 12 erster Art sind insbesondere in den Figuren 2 und 3 sowie 6 bis 8 zu erkennen. Montagehülsen 13 zweiter Art zeigen die Darstellung der Figuren 4, 5 sowie 9 und 10.

Die Montagehülsen 12, 13 weisen einen Hülsenkörper 16 und einen kaltfließgepressten Hülsenkopf 18, 19 auf. Jeder Hülsenkopf 18, 19 besitzt eine Durchgangsöffnung 20. Die Durchgangsöffnung 20 ist beim Kaltfließpressen des Hülsenkopfs 18, 19 erzeugt. Die kaltfließgepressten Hülsenköpfe 18, 19 sind an einer Stirnseite 21 des Hülsenkörpers 16 positioniert.

Die Hülsenkörper 16 und die Hülsenköpfe 18,19 sind separat voneinander gefertigte Bauteile, die zur Montagehülse 12, 13 zusammengesetzt sind. Ein Hülsenkopf 18, 19 kann mit dem Hülsenkörper 16 formschlüssig und/oder kaltschlüssig und/oder stoffschlüssig gefügt sein.

Bei einer formschlüssigen Verbindung sind die Fügeflächen von Hülsenkörper 16 und Hülsenkörper 18,19 geometrisch aufeinander abgestimmt, so dass ein Formschluss durch Ineinandergreifen von mindestens jeweils einem Formschlusselement am Hülsenkopf 18,19 und an einem stirnseitigen Ende eines Hülsenkörpers 16 erfolgt.

Eine kraftschlüssige Verbindung kann durch eine Pressverbindung bzw. Pressfügen von Hülsenkopf 18,19 und Hülsenkörper 16 erfolgen.

Eine stoffschlüssige Fügung von Hülsenkörper 16 und Hülsenkopf 18,19 erfolgt vorzugsweise schweißtechnisch durch Reibschweißen, Lichtbogen- oder Widerstandsschweißen. Auch eine stoffschlüssige Klebeverbindung von Hülsenkopf 18, 19 und Hülsenkörper 16 ist herstellungs- und bauteiltechnisch vorteilhaft.

Die Hülsenkörper 16 und die Hülsenköpfe 18, 19 können aus voneinander verschiedenen Werkstoffen, insbesondere Stahlwerkstoffen, bestehen.

Die Montagehülsen 12 erster Art und die Montagehülsen 13 zweiter Art unterscheiden sich in der Ausgestaltung der Hülsenköpfe 18 bzw. 19 oder in der Position des Hülsenkopfs 18, 19 relativ zur Außenfläche einer Wand 10, 11 des Rahmenkörpers 2.

Ein Hülsenkopf 18, 19 weist ein stirnseitig am Hülsenkörper 16 anliegendes Scheibenelement 22 und hülsenkörperseitig ein Positionierelement 23 auf, welcher in den Hülsenkörper 16 ragt. Dies ist sowohl bei den Hülsenköpfen 18 der Montagehülsen 12 erster Art als auch bei den Hülsenköpfen 19 der Montagehülsen 13 möglich.

An der vom Hülsenkörper 16 abgewandten Stirnseite 24 weisen die Hülsenköpfe 18 einen Montageabschnitt 25 auf.

Bei den Hülsenköpfen 18 der Montagehülsen 12 erster Art sind die Montageabschnitte 25 als vom Scheibenelement 22 vorstehende Ausformung 26 mit gerundeten Außenflächen ausgeführt. Der Montageabschnitt 25 der Hülsenköpfe 18 der Montagehülsen 12 erster Art ist kalottenförmig gestaltet.

Sowohl die Hülsenköpfe 18 der Montagehülsen 12 erster Art als auch die Hülsenköpfe 19 der Montagehülsen 13 zweiter Art weisen eine zentrische Durchgangsöffnung 20 auf. In den Durchgangsöffnungen 20 können Montageabschnitte in Form von Innengewinden vorgesehen sein.

Die Hülsenkörper 16 der Montagehülsen 12 erster Art und die Hülsenkörper 16 der Montagehülsen 13 zweiter Art erstrecken sich zwischen der oberen Wand 10 und der unteren Wand 11 im Hohlraumabschnitt 9 des Rahmenkörpers 2 des Hilfsrahmens 1. Durch den Längsdurchgang 17 des Hülsenkörpers 16, 17 kann ein Montageelement, insbesondere ein Schraubbolzen, geführt werden. Der Längsdurchgang 17 im Hülsenkörper 16 setzt sich mit gleichem Durchmesser oder mit abgestuftem kleineren Durchmesser in den Durchgangsöffnungen 20 der Hülsenköpfe 18, 19 fort.

Insbesondere in den Darstellungen der Figuren 1 bis 3 erkennt man, dass der Hülsenkörper 16 einer Montagehülse 12 erster Art durch die obere Öffnung 14 in der Wand 10 des Rahmenkörpers 2 ragt, wobei der Hülsenkopf 18 der Montagehülse 12 mit Abstand a zu der Öffnung 14 und der benachbarten Außenfläche 27 des Rahmenkörpers 2 angeordnet ist. Die Montagehülse 12 steht folglich mit einem oberen Längenabschnitt 28 gegenüber dem Rahmenkörper 2 und dessen oberer Wand 10 vor.

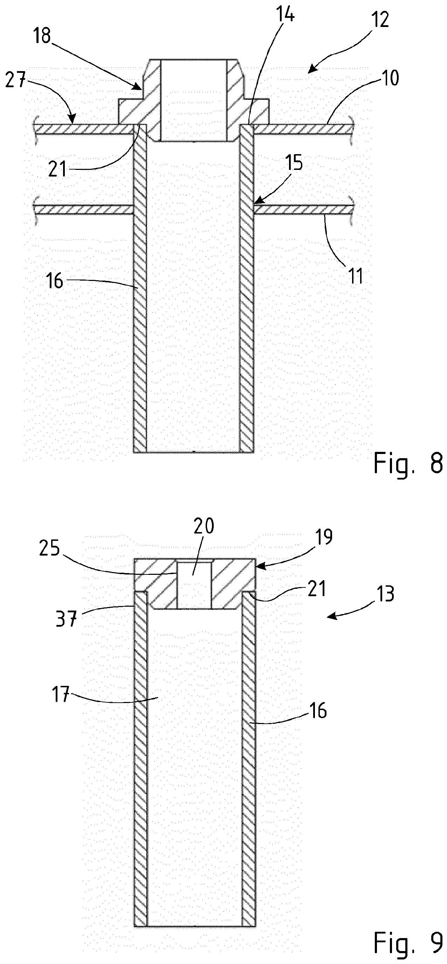

Bei der in der Figur 8 dargestellten Ausführungsvariante liegt die Montagehülse 12 erster Art mit dem Scheibenelement 22 auf einer oberen Wand 10 des Rahmenkörpers 2 auf. Der Hülsenkörper 16 schließt bündig mit der Außenfläche der oberen Wand 10 ab. Der Hülsenkopf 18 kommuniziert mit der Öffnung 14 in der oberen Wand 10. Der Hülsenkörper 16 ragt durch eine Öffnung 15 in der unteren Wand 11 des Rahmenkörpers 2. Die Montagehülse 12 erster Art ist mit der oberen Wand 10 und der unteren Wand 11 gefügt.

Die Figuren 4, 5 und 10 verdeutlichen, dass der Hülsenkopf 19 einer Montagehülse 13 zweiter Art in der Öffnung 14 der oberen Wand 10 des Rahmenkörpers 2 angeordnet ist. Die Montagehülse 13 ist mit dem Rahmenkörper 2 im Bereich der Öffnung 14 und des Hülsenkopfs 19 gefügt.

Mit einem vom Hülsenkopf 18, 19 abgewandten unteren Ende 29 kontaktiert der Hülsenkörper 16 eine Innenfläche 30 der unteren Wand 11 des Rahmenkörpers 2. Hierbei umschließt der Hülsenkörper 16 die untere Öffnung 15 des Rahmenkörpers 2 koaxial. Der Hülsenkörper 16 steht mit dem Ende 29 auf der Innenfläche 30 auf und ist mit dem Rahmenkörper 2 gefügt.

Bei dem Hilfsrahmen 1 wie in der Figur 10 dargestellt, ragt der Hülsenkörper 16 mit einem vom Hülsenkopf 19 abgewandten unteren Endabschnitt 31 durch die Öffnung 15 in der unteren Wand 11 des Rahmenkörpers 2 und steht dort gegenüber der unteren Wand 11 des Rahmenkörpers 2 vor. Auch im Bereich der Öffnung 15 in der unteren Wand 11 ist der Hülsenkörper 16 mit dem Rahmenkörper 2 gefügt.

Im Bereich der unteren Öffnung 15 weist die untere Wand 11 des Rahmenkörpers 2 eine topfförmige Einprägung 32 auf. Die Einprägung 32 ist nach innen in den Hohlraumabschnitt 9 des Rahmenkörpers 2 eingeformt.

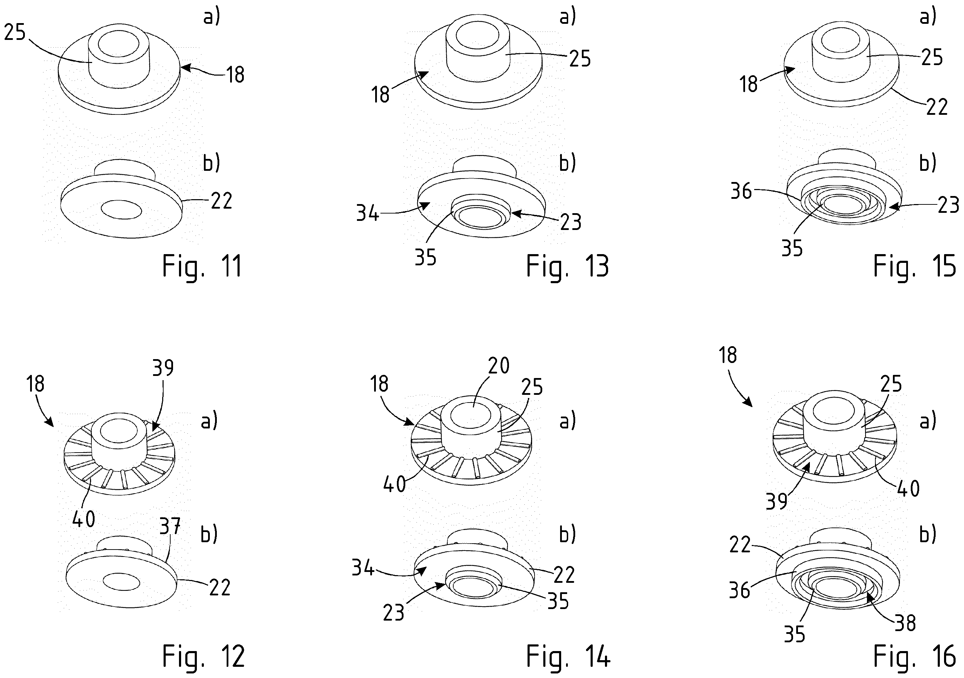

In den Figuren 11 bis 24 sind verschiedene Ausführungsformen von Hülsenköpfen 18, 19 jeweils in zwei perspektivischen Darstellungen gezeigt. Die Hülsenköpfe 18, 19 können wärmbehandelt bzw. vergütet und/oder gehärtet sein.

Die Figuren 11 bis 16 zeigen jeweils einen Hülsenkopf 18 mit einem Scheibenelement 22 und einem stirnseitigen Montageabschnitt 25. Der Montageabschnitt 25 ist als gegenüber dem Scheibenelement 22 vorkragender zylindrischer Stutzen 33 ausgeführt.

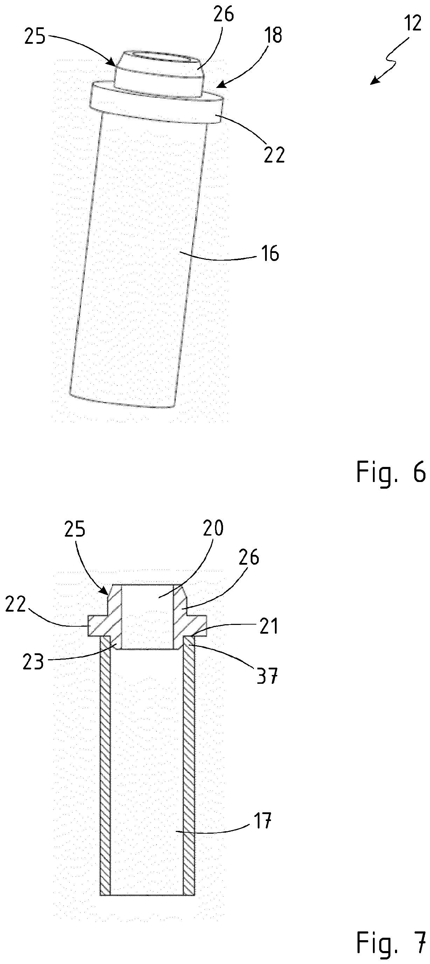

Die Hülsenköpfe 18 in den Ausführungsformen gemäß der Darstellungen 13 bis 16 weisen hülsenkörperseitig auf ihrer zu einem Hülsenkörper 16 gerichteten Unterseite 34 ein Positionierelement 23 auf. Das Positionierelement 23 kann als Fortsatz 35 ausgeführt sein, wie in den Figuren 13 und 14 dargestellt. Des Weiteren kann ein weiteres Positionierelement 23 durch einen an der Unterseite 34 konzentrisch um den Fortsatz 35 verlaufenden Ring 36 gebildet sein, wie dies in den Figuren 15 und 16 zu erkennen ist. Die Positionierelemente 23 bzw. der Fortsatz 35 und der Ring 36 stehen gegenüber der Unterseite 34 eines Hülsenkopfs 18 bzw. dessen Scheibenelements 22 vor. Der Ring 36 umfasst einen stirnseitigen Endabschnitt 37 (in den Figuren 7 und 9 gekennzeichnet) des Hülsenkörpers 16 und liegt an dem Endabschnitt 37 an. Der Endabschnitt 37 wird in der Nut 38 zwischen dem Fortsatz 35 und dem Ring 36 aufgenommen.

Die Hülsenköpfe 18 gemäß den Ausführungen der Figuren 12, 14 und 16 weisen auf ihrer Stirnseite 24 eine Friktionsstruktur 39 auf. Die Friktionsstruktur 39 ist durch Friktionselemente 40 gebildet, die oberseitig an der Stirnseite 24 des Hülsenkopfs 18 vorstehen. Die Friktionselemente 40 sind als Rippen ausgeführt, die um den Montageabschnitt 25 umlaufend radial nach außen erstrecken.

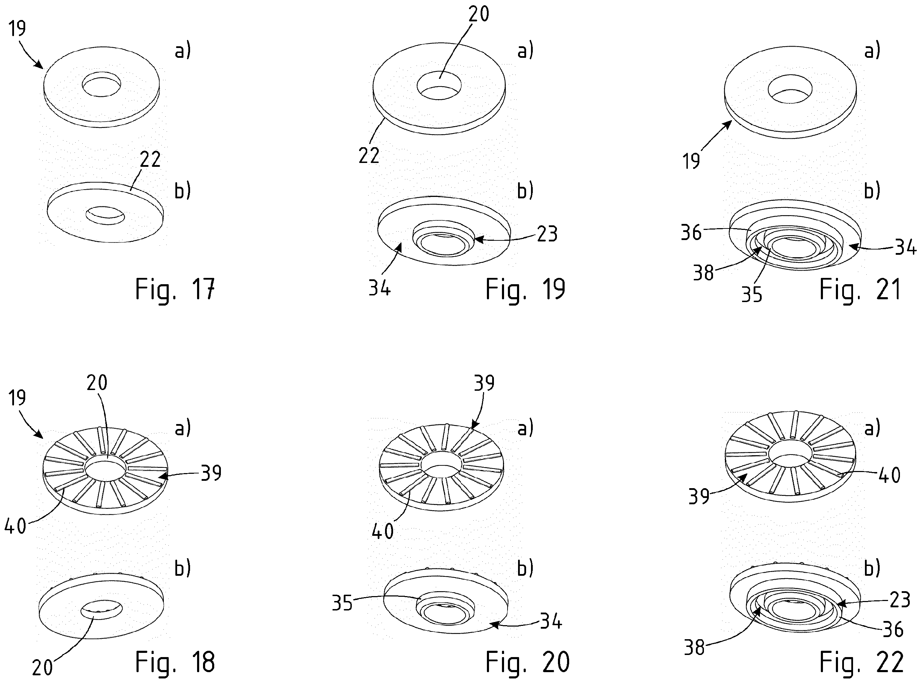

Die Darstellungen der Figuren 17 bis 22 zeigen Hülsenköpfe 19 mit einem Scheibenelement 22. Jeder Hülsenkopf 19 weist eine Durchgangsöffnung 20 auf. Die Ausgestaltungen der Hülsenköpfe 19 gemäß der Darstellungen der Figuren 19 bis 22 weisen unterseitig Positionierelemente 23 in Form von Fortsätzen 35 und Ringen 36 auf. Diesbezüglich wird auf die vorstehenden Ausführungen verwiesen.

Die Ausführungsform der Hülsenköpfe 19 gemäß den Darstellungen der Figuren 18, 20 und 22 besitzen an ihrer Stirnseite 24 eine Friktionsstruktur 39 mit Friktionselementen 40 in Form von Rippen, die umlaufend um die Durchgangsöffnung 20 angeordnet sind und sich radial von der Durchgangsöffnung 20 ausgehend, nach außen erstrecken.

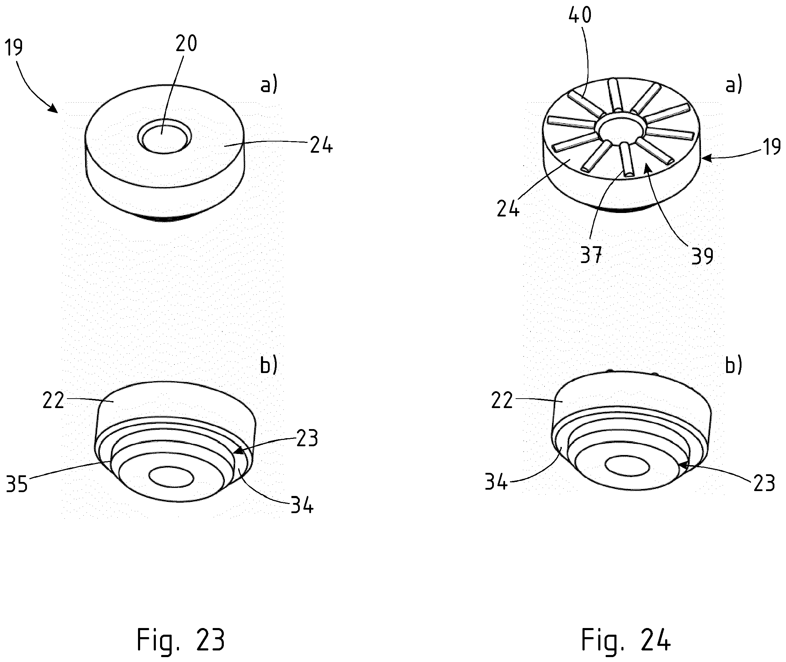

Die Figuren 23 und 24 zeigen nochmals einen Hülsenkopf 19 mit einem Positionierelement 23 in Form eines Fortsatzes 35 an der Unterseite 34 des Hülsenkopfs 19. Bei der Ausführungsform des Hülsenkopfs 19 gemäß der Darstellung von Figur 24 ist eine Friktionsstruktur 39 auf der Stirnseite 24 vorgesehen. Die Friktionsstruktur 39 ist durch radial um die Durchgangsöffnung 20 umlaufende auf einem Teilkreis versetzt angeordnete und sich nach außen erstreckende Friktionselemente 40 in Form von Rippen gebildet.

### Bezugszeichen:

- 1 -: Hilfsrahmen
- 2 -: Rahmenkörper
- 3 -: Rahmenprofil
- 4 -: Rahmenprofil
- 5 -: Schalenbauteil
- 6 -: Schalenbauteil
- 7 -: Anbaukomponente
- 8 -: Aufbaukomponente
- 9 -: Hohlraumabschnitt
- 10 -: Wand
- 11 -: Wand
- 12 -: Montagehülse erster Art
- 13 -: Montagehülse zweiter Art
- 14 -: Öffnung
- 15 -: Öffnung
- 16 -: Hülsenkörper
- 17 -: Längsdurchgang
- 18 -: Hülsenkopf
- 19 -: Hülsenkopf
- 20 -: Durchgangsöffnung
- 21 -: Stirnseite von 16
- 22 -: Scheibenelement
- 23 -: Positionierelement
- 24 -: Stirnseite von 18, 19
- 25 -: Montageabschnitt
- 26 -: Ausformung
- 27 -: Außenfläche
- 28 -: Längenabschnitt
- 29 -: unteres Ende von 16
- 30 -: Innenfläche
- 31 -: Endabschnitt
- 32: - Einprägung
- 33 -: Stutzen
- 34 -: Unterseite von 18, 19
- 35 -: Fortsatz
- 36 -: Ring
- 37 -: Endabschnitt von 16
- 38 -: Nut
- 39 -: Friktionsstruktur
- 40 -: Friktionselement

- a -: Abstand

## Patentansprüche

1. Hilfsrahmen für ein Kraftfahrzeug, welcher einen Rahmenkörper (2) und zumindest eine Montagehülse (12, 13) aufweist, wobei die Montagehülse (12, 13) einen Hülsenkörper (16) mit einem Längsdurchgang (17) und einen Hülsenkopf (18, 19) mit einer Durchgangsöffnung (20) besitzt, **dadurch gekennzeichnet, dass** der Hülsenkopf (18, 19) und der Hülsenkörper (16) separat voneinander gefertigt sind und der Hülsenkopf (18, 19) stirnseitig auf dem Hülsenkörper (16) positioniert ist.

2. Hilfsrahmen nach Anspruch 1, **dadurch gekennzeichnet, dass** der Hülsenkopf (18, 19) ein Kaltfließpressteil ist, wobei die Durchgangsöffnung (20) beim Kaltfließpressen im Hülsenkopf (18, 19) erzeugt ist.

3. Hilfsrahmen nach Anspruch 1, **dadurch gekennzeichnet, dass** der Hülsenkopf durch spanende Bearbeitung hergestellt ist.

4. Hilfsrahmen nach einem der Ansprüche 1 bis 3, **dadurch gekennzeichnet, dass** der Hülsenkörper (16) und der Hülsenkopf (18, 19) formschlüssig und/oder kraftschlüssig und/oder stoffschlüssig gefügt sind.

5. Hilfsrahmen nach einem der Ansprüche 1 bis 4, **dadurch gekennzeichnet, dass** der Hülsenkopf (18, 19) ein stirnseitig am Hülsenkörper (16) anliegendes Scheibenelement (22) und hülsenkörperseitig zumindest ein Positionierelement (23) aufweist, welches in den Hülsenkörper (16) ragt und/oder am stirnseitigen Endabschnitt (37) des Hülsenkörpers (16) außen anliegt.

6. Hilfsrahmen nach einem der Ansprüche 1 bis 5, **dadurch gekennzeichnet, dass** der Hülsenkopf (18, 19) an seiner vom Hülsenkörper (16) abgewandten Stirnseite (24) einen Montageabschnitt (25) aufweist.

7. Hilfsrahmen nach einem der Ansprüche 1 bis 6, **dadurch gekennzeichnet, dass** der Hülsenkopf (18, 19) eine Friktionsstruktur (39) aufweist.

8. Hilfsrahmen nach Anspruch 7, **dadurch gekennzeichnet, dass** die Friktionsstruktur (39) an einer Stirnseite (24) des Hülsenkopfs (18, 19) vorgesehen ist.

9. Hilfsrahmen nach Anspruch 7 oder 8, **dadurch gekennzeichnet, dass** die Friktionsstruktur (39) die Durchgangsöffnung (20) zumindest partiell umgibt.

10. Hilfsrahmen nach einem der Ansprüche 7 bis 9, **dadurch gekennzeichnet, dass** die Friktionsstruktur (39) aus zumindest einem Friktionselement (40) gebildet ist und das Friktionselement (40) rippenförmig oder punktförmig konfiguriert ist.

11. Hilfsrahmen nach einem der Ansprüche 1 bis 10, **dadurch gekennzeichnet, dass** der Rahmenkörper (2) aus Schalenbauteilen (5, 6) gebildet ist.

12. Hilfsrahmen nach einem der Ansprüche 1 bis 11, **dadurch gekennzeichnet, dass** der Hülsenkopf (18, 19) in einer Öffnung (14) des Rahmenkörpers (2) angeordnet ist.

13. Hilfsrahmen nach einem der Ansprüche 1 bis 11, **dadurch gekennzeichnet, dass** der Hülsenkopf (18, 19) mit einer hülsenkörperseitigen Anlagelagefläche am Rahmenkörper (2) anliegt.

14. Hilfsrahmen nach einem der Ansprüche 1 bis 11, **dadurch gekennzeichnet, dass** der Hülsenkörper (16) durch eine Öffnung (14) in einer Wand (10) des Rahmenkörpers (2) ragt und der Hülsenkopf (18, 19) mit Abstand (9) zu einer Außenfläche (27) des Rahmenkörpers (2) angeordnet ist.

15. Hilfsrahmen nach einem der Ansprüche 1 bis 14, **dadurch gekennzeichnet, dass** der Hülsenkörper (18, 19) mit einem vom Hülsenkopf (16) abgewandten Endabschnitt (31) durch eine Öffnung (15) in einer Wand (11) des Rahmenkörpers (2) ragt.

16. Hilfsrahmen nach einem der Ansprüche 1 bis 15, **dadurch gekennzeichnet, dass** der Hülsenkörper (16) mit einem vom Hülsenkopf (18, 19) abgewandten Ende (31) eine Innenfläche (30) einer Wand (11) des Rahmenkörpers (2) kontaktiert und eine Öffnung (15) in der Wand (11) des Rahmenkörpers (2) umschließt.

17. Hilfsrahmen nach einem der Ansprüche 1 bis 16, **dadurch gekennzeichnet, dass** der Hülsenkopf (18, 19) einen Gewindeabschnitt aufweist.

18. Hilfsrahmen nach einem der Ansprüche 1 bis 17, **dadurch gekennzeichnet, dass** der Hülsenkopf (18, 19) und der Hülsenkörper (16) aus verschiedenen Werkstoffen bestehen.

19. Hilfsrahmen nach einem der Ansprüche 1 bis 18, **dadurch gekennzeichnet, dass** der Hülsenkörper (16) und/oder der Hülsenkopf (18, 19) gehärtet oder vergütet ist.
